# EUROPÄISCHE PATENTSCHRIFT

(11) **EP 0 464 243 B1**
(45) Veröffentlichungstag und Bekanntmachung des Hinweises auf die Patenterteilung: **14.06.1995**
(21) Anmeldenummer: 90112780.3
(22) Anmeldetag: 04.07.1990
(51) Int. Cl.: G01N 27/12

(54) **Sauerstoffsensor mit halbleitendem Galliumoxid**
Oxygen sensor with semiconducting gallium oxide
Capteur d'oxygène avec oxyde de gallium semi-conducteur

(43) Veröffentlichungstag der Anmeldung: 08.01.1992
(73) Patentinhaber: SIEMENS AKTIENGESELLSCHAFT, 80333 München (DE)
(72) Erfinder: Fleischer, Maximilian, Dipl.-Phys., D-8000 München 19 (DE); Hanrieder, Wolfgang, Dipl.-Phys., D-8000 München 70 (DE); Meixner, Hans, Dr. Dipl.-Phys., D-8013 Haar (DE)

(56) Entgegenhaltungen:
- EP-A- 0 046 989
- EP-A- 0 364 315
- FR-A- 2 298 104
- FR-A- 2 393 302
- US-A- 3 961 248
- US-A- 4 500 412

## Beschreibung

Die vorliegende Erfindung betrifft einen Sauerstoffsensor mit halbleitendem Galliumoxid, mit einem elektrisch nichtleitenden Trägerkörper, auf den Galliumoxid aufgebracht ist, mit einer Kontaktelektroden-Anordnung zum Messen der elektrischen Leitfähigkeit des Galliumoxids, einer Heizanordnung zum Heizen des Sauerstoffsensors bei einer vorbestimmten Betriebstemperatur, einer Schutzhülle, die den Sauerstoffsensor vor äußeren mechanischen Einflüssen schützt, und einem Befestigungssockel.

Galliumoxid (Ga₂O₃) ist als Ausgangsmaterial für Hochtemperatur-Sauerstoffsensoren bekannt. Hergestellt wird es insbesondere in Form von keramischen, aus der Lösung gefällten Sinterproben. (Bulk-Material), vergl. z. B.: T. A. Jones, J. G. Firth, and B. Mann in "Sensors & Actuators", Vol. 8 (1985) S. 281 u. GB-PS 1529461.

Als Nachteile der mit diesem Bulk-Material hergestellten Sauerstoffsensoren sind im wesentlichen zu nennen:
- Aufwendiges nicht automatisierbares Herstellungsverfahren,
- schwere Reproduzierbarkeit der Sensoreigenschaften.

Bei hohen Temperaturen (> 750 °C) ändert sich der Sauerstoffgehalt des Materials Ga₂O₃ mit dem Sauerstoffpartialdruck der Umgebungsatmosphäre. Die elektrische Leitfähigkeit des halbleitenden Ga₂O₃ hängt vom Sauerstoffgehalt des Materials und somit vom Sauerstoffpartialdruck der Umgebungsatmosphäre ab.

Das Sensorsignal ist also die elektrische Leitfähigkeit des halbleitenden Ga₂O₃. Die Sauerstoffdiffusion durch das Volumen des Materials beschränkt dabei die Ansprechgeschwindigkeit der Sensoren.

Das halbleitende Metalloxid besteht bei dem bekannten Sauerstoffsensor im wesentlichen aus Ga₂O₃, aus dem ein kompakter, im wesentlich kugelförmiger Widerstandskörper gebildet ist. Ein derartiger Widerstandskörper weist eine relativ hohe Erfassungs-Reaktionszeit auf, ist nur mit aufwendigen Verfahren herstellbar und stellt einen Sensor-Bestandteil dar, der die Fertigung von Sensoren mit gut reproduzierbaren Eigenschaften erschwert.

Weiterhin ist aus der GB 1 562 623 eine Vorrichtung zur Bestimmung der Zusammensetzung von Abgas bei Verbrennungsprozessen bekannt. Auf einem elektrisch isolierenden Substrat ist eine poröse Metalloxidschicht in Dickschichtweise aufgetragen. Weiterhin befindet sich auf dem Substrat eine Heizanordnung, um den Sensor auf die gewünschte Betriebstemperatur von 900°C zu erwärmen. Die Leitfähigkeit der Metalloxidschicht ändert sich entsprechend der Konzentation von oxidierenden oder reduzierenden Gasen. Um die Reaktionszeit zu verbessern, wird eine poröse Metalloxid-Dickfilmschicht verwendet, weil die Reaktivität der Metallschicht entscheidend von der dem Gas ausgesetzten Oberfläche abhängt.

Der vorliegenden Erfindung liegt die Aufgabe zugrunde, einen Sauerstoffsensor der eingangs genannten Art und gemäß dem Oberbegriff des Patentanspruchs 1 zu schaffen, der langzeitstabil ist, kostengünstig herstellbar ist, eine relativ kleine Erfassungs-Reaktionszeit aufweist und im übrigen mit gut reproduzierbaren Eigenschaften gefertigt werden kann.

Zur Lösung dieser Aufgabe wird ein Sauerstoffsensor nach dem Oberbegriff des Patentanspruchs 1 vorgeschlagen, der die im kennzeichnenden Teil des Patentanspruchs 1 angegebenen Merkmale aufweist.

Vorteilhafte Weiterbildungen der Erfindung sind durch die in den Unteransprüchen angegebenen Merkmale gekennzeichnet.

Ga₂O₃ ist bei Temperaturen über 400 °C ein n-Halbleiter. Über 850 °C steht der Sauerstoffgehalt des Materials in Wechselwirkung mit dem Sauerstoffgehalt der Umgebungsatmosphäre, so daß die spezifische elektrische Leitfähigkeit des Materials ein Maß für den gegenwärtig herrschenden Sauerstoffpartialdruck ist.

Erfindungsgemäß ist vorgesehen, daß das Galliumoxid als eine O₂-sensitive β-Ga₂O₃-Dünnschicht ausgebildet ist. Die Kontaktelektroden-Anordnung ist zur Bildung eines katalytisch nichtaktiven Sauerstoffsensors mit einer deaktivierenden Schicht vollständig bedeckt. Die Kontaktelektroden sind vorzugsweise in interdigitaler Anordnung flächig verteilt angeordnet. Die Dünnschicht ist auf einer aluminiumfreien Trägerfläche des Trägerkörpers angeordnet. Der Trägerkörper besteht vorzugsaus einem BeO-Körper. Der Trägerkörper kann auch mit einer Trägerabdeckschicht, vorzugsweise aus BeO, versehen sein, auf die die Dünnschicht aufgebracht ist. Gemäß einer Weiterbildung der Erfindung ist vorgesehen, daß der Trägerkörper mit einer Trägerabdeckschicht aus SiO₂ versehen ist, auf die die Dünnschicht aufgebracht ist.

Auf den in der Dünnfilmtechnik standardmäßig verwendeten Al₂O₃-Substraten hergestellte Ga₂O₃-Dünnfilme sind bei Temperaturen um 900°C - 1000°C nicht stabil, wie eigene Untersuchungen gezeigt haben. Der Grund liegt in der chemischen Ähnlichkeit der Ga³¹ und der Al³¹-Ionen, die zu einer Vermischung der beiden Substanzen führt.

Die Kontaktelektroden-Anordnung ist entweder direkt auf den Trägerkörper, auf die Trägerabdeckschicht aufgebracht oder in die Dünnschicht eingebettet.

Die Dicke der Dünnschicht beträgt zwischen 0,5 bis 10 »m, vorzugsweise 1 bis 2 »m. Die Dicke der Kontaktelektroden beträgt zwischen 1 bis 10 »m, vorzugsweise 2 bis 3 »m. Vorzugsweise bestehen die Kontaktelektroden aus Pt. Sie können jedoch auch aus einer Legierung aus Platin-Metallen bestehen. Bei einer anderen erfindungsgemäßen Ausführungsform ist vorgesehen, daß die Kontaktelektroden aus einem metallisch leitenden Keramikwerkstoff bestehen.

In Nachbarschaft der Dünnschicht ist ein Temperatursensor auf dem Trägerkörper angeordnet, der die Ist-Betriebstemperatur erfaßt und dessen Erfassungssignal vorzugsweise zur Regelung auf die Soll-Betriebstemperatur verwendet wird.

Auf dem Trägerkörper kann eine Vielzahl von gleichartigen Sauerstoffsensoren und/oder andersartigen Sensoren angeordnet sein.

Eine vorteilhafte Weiterbildung der Erfindung sieht vor, daß auf dem Trägerkörper paarweise zumindest ein sauerstoffdicht abgedeckter Sauerstoffsensor und ein nichtabgedeckter Sauerstoffsensor zur Erzielung einer Kompensation der Temperaturabhängigkeit der elektrischen Leitfähigkeit des Sauerstoffsensors angeordnet sind. Der sauerstoffdicht abgedeckte Sauerstoffsensor und der nichtabgedeckte Sauerstoffsensor bilden in Reihenschaltung einen Brückenzweig einer Wheatstone-Brücke. Der andere Brückenzweig ist dann aus einer Reihenschaltung zweier ohm'scher Widerstände gebildet, wobei die Potentialdifferenz zwischen den Verbindungspunkten zwischen den beiden Sauerstoffsensoren einerseits und den zwei ohm'schen Widerständen des anderen Brückenzweiges andererseits als Ausgangssignal des Sauerstoffsensors.

Die Kontaktelektroden sind jeweils mit einer Anschlußelektrode, die vorzugsweise aus Pt besteht, verbunden, wobei diese Anschlußelektroden aus dem Sauerstoffsensor herausgeführt sind. Die Anschlußelektroden sind mit einer sauerstoffdichten Schicht abgedeckt.

Der Sauerstoffsensor ist bei einem Sauerstoffpartialdruck von minimal 10⁻¹⁴ bar (x 10⁵Pa) an aufwärts zu betreiben.

Die Dünnschicht wird mittels der Heizanordnung auf eine Betriebstemperatur in einem Bereich von 750° bis 1100°C, vorzugsweise 950° bis 1000°C, aufgeheizt.

Zur Herstellung des Sauerstoffsensors ist erfindungsgemäß vorgesehen, daß die O₂-sensitive Dünnschicht durch HF-Sputtern aufgebracht wird, wobei als Materialquelle ein Ga₂O₃-Keramikarget dient, wobei der Trägerkörper auf eine Temperatur von vorzugsweise 500°C aufgeheizt wird und wobei dem Sputtergas Argon ein Sauerstoffanteil im Bereich von 10 bis 30, vorzugsweise 20 Volumenprozent, beigemischt wird.

Die Kontaktelektroden werden entweder mittels Siebdruck aufgebracht, oder sie werden mittels Aufsputtern eines Pt-Films aufgebracht und mittels Photolithographie und anschließender Plasmaätzung strukturiert.

Zur Herstellung eines Sauerstoffsensors, dessen Kontaktelektroden in die Dünnschicht eingebettet sind, ist vorgesehen, daß in einem ersten Schritt eine erste Lage der O₂-sensitiven Dünnschicht aufgebracht wird, daß in einem zweiten Schritt auf die erste Lage der O₂-sensitiven Dünnschicht die Kontaktelektroden-Anordnung aufgebracht wird und daß in einem dritten Schritt eine zweite Lage der O₂-sensitiven Dünnschicht zur Einbettung der Kontaktelektroden-Anordnung aufgebracht wird.

Zur Einstellung der Stöchiometrie der O₂-sensitiven Dünnschicht und zum Erzielen der erforderlichen Kristallstruktur der O₂-sensitiven Dünnschicht wird ein Temperprozeß an Luft bei Temperaturen um vorzugsweise 1100°C durchgeführt.

Im folgenden wir die Erfindung anhand mehrerer Figuren im einzelnen beschrieben.
- Fig. 1: zeigt die Draufsicht eines Ausführungsbeispiels der Erfindung, bei dem zum Zwecke einer Betriebstemperaturregelung außer dem eigentlichen Sauerstoffsensor ein Thermoelement auf einem Trägerkörper angeordnet ist.
- Fig. 2: zeigt die Draufsicht eines weiteren Ausführungsbeispiels der Erfindung, bei dem zum Zwecke einer Betriebstemperaturregelung außer dem eigentlichen Sauerstoffsensor eine Widerstandsschleife auf einem Trägerkörper angeordnet ist.
- Fig. 3: zeigt die Druntersicht des in Fig. 1 gezeigten Trägerkörpers mit einer Heizanordnung zum Heizen des Sensors.
- Fig. 4: zeigt eine Längsschnittansicht des Sauerstoffsensors gemäß einem Ausführungsbeispiel, bei dem eine Elektrodenanordnung direkt auf einem Trägerkörper sitzt und von einer sensitiven Schicht bedeckt ist.
- Fig. 5: zeigt eine Längsschnittansicht des Sauerstoffsensors gemäß einem anderen Ausführungsbeispiel, bei dem eine Elektrodenanordnung auf einer Trägerkörper-Abdeckschicht sitzt und von einer sensitiven Schicht bedeckt ist.
- Fig. 6: zeigt eine Längsschnittansicht des Sensors gemäß einem weiteren Ausführungsbeispiel, bei dem eine Elektrodenanordnung in eine auf einem Trägerkörper liegende sensitive Schicht eingebettet ist.
- Fig. 7: zeigt die Draufsicht einer Anordnung gemäß einem weiteren Ausführungsbeispiel, bei dem ein gasdicht abgedeckter Sensor und ein nichtabgedeckter Sensor zum Zwecke der Kompensation der Temperaturabhängigkeit der elektrischen Leitfähigkeit des Sensors angeordnet sind.
- Fig. 8: zeigt die Draufsicht eines Sensorgehäuses für den erfindungsgemäßen Sensor.
- Fig. 9: zeigt die Längsschnittansicht des Sensorgehäuses gemäß Fig. 8.

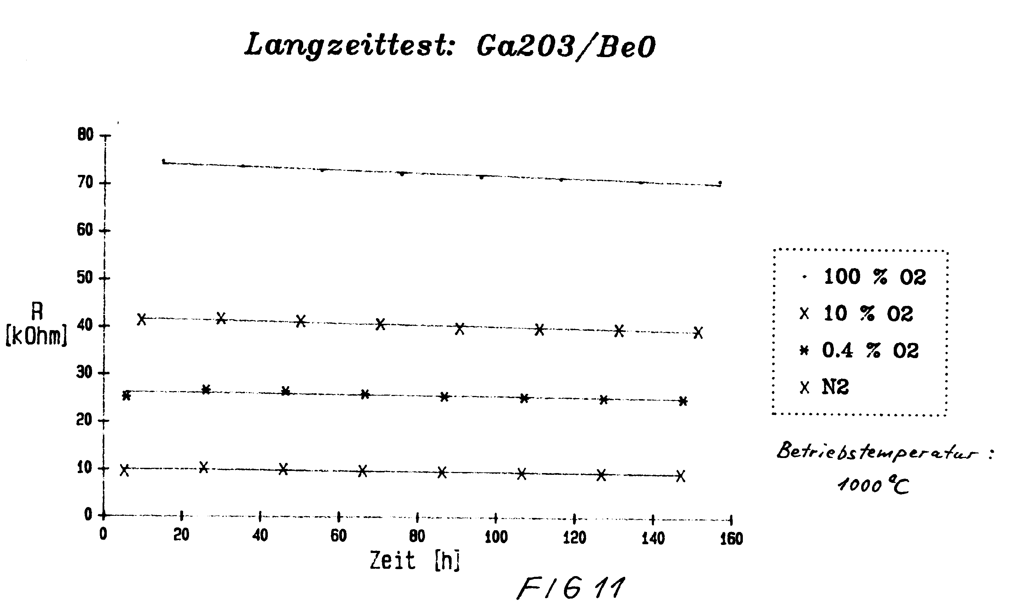

- Fig. 10: zeigt eine Kennlinienschar, die die Sauerstoffsensitivität einer Ga₂O₃-Dünnschicht bei verschiedenen Betriebstemperaturen angibt, mit einem eingetragenen bevorzugten Betriebstemperaturbereich.
- Fig. 11: zeigt ein Diagramm, das die Stabilität des erfindungsgemäßen Sauerstoffsensors bei einer Betriebstemperatur von 1000°C veranschaulicht.

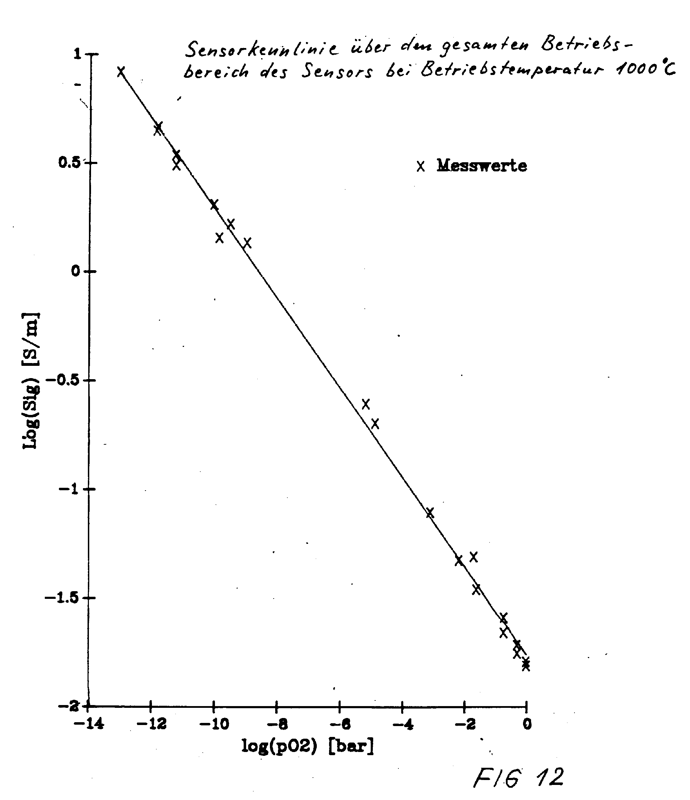

- Fig. 12: zeigt die Kennlinie der Sauerstoffsensitivität einer Ga₂O₃-Dünnschicht bei 1000°C über den Sauerstoffpartialdruckbereich, der dem gesamten Betriebsbereich des Sensors entspricht.

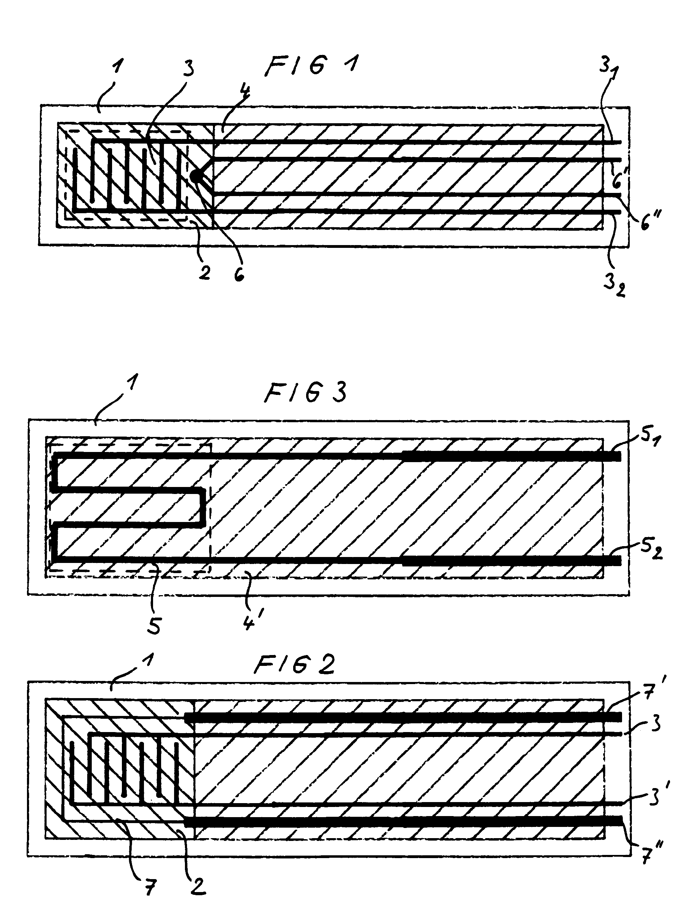

Wie bereits erläutert, zeigt Fig. 1 die Draufsicht eines Ausführungsbeispiels der Erfindung, bei dem zum Zwecke einer Betriebstemperatur außer dem eigentlichen Sauerstoffsensor ein Thermoelement 6 auf einem Trägerkörper 1 angeordnet ist. Das Thermoelement 6 ist zusammen mit der Kontaktelektroden-Anordnung 3, die eine interdigitale Struktur aufweist, auf der Ga₂O₃-Dünnschicht 2 angeordnet. Zuleitungsbahnen 3₁ und 3₂, die die Kontaktelektroden-Anordnung 3 von der Außenseite des Sensors her anschließbar machen, sind auf dem Trägerkörper 1 angeordnet und von einer Schutzschicht 4 bedeckt. Zwischen dem Trägerkörper 1 und dieser Schutzschicht 4 liegen außerdem Leiterbahnen 6′, 6˝ zum Verbinden des Thermoelements 6 mit einer externen Meßanordnung.

Fig. 2 zeigt, wie bereits erläutert, die Draufsicht eines weiteren Ausführungsbeispiels der Erfindung, bei dem zum Zwecke einer Betriebstemperatur außer dem eigentlichen Sauerstoffsensor eine Widerstandsschleife 7 zusammen mit der Kontaktelektroden-Anordnung 3 auf der Ga₂O₃-Dünnschicht 2 angeordnet ist. Die Widerstandsschleife 7 ist über Leiterbahnen kleinen elektrischen Widerstands 7′, 7˝ an eine externe Meßeinrichtung anschließbar. Sowohl das Thermoelement gemäß Fig. 1 als auch die Widerstandsschleife gemäß Fig. 2 sind derart angeordnet, daß sie die Betriebstemperatur der Ga₂O₃-Dünnschicht 2 im Bereich der Kontaktelektroden-Anordnung 3 für Regelzwecke erfassen können.

Fig. 3 zeigt, wie bereits erläutert, die Druntersicht des in Fig. 1 gezeigten Trägerkörpers 1 mit einer Heizanordnung 5 zum Heizen der Dünnschicht 2 bei der erforderlichen Betriebstemperatur. Die Heizanordnung 5 ist über Leiterbahnen 5₁, 5₂ geringen Widerstands an eine externe Heizstromversorgung anschließbar. Diese Leiterbahnen 5₁, 5₂ und die Heizanordnung 5 selbst sind mit einer nichtleitenden Schutzschicht 4′ bedeckt.

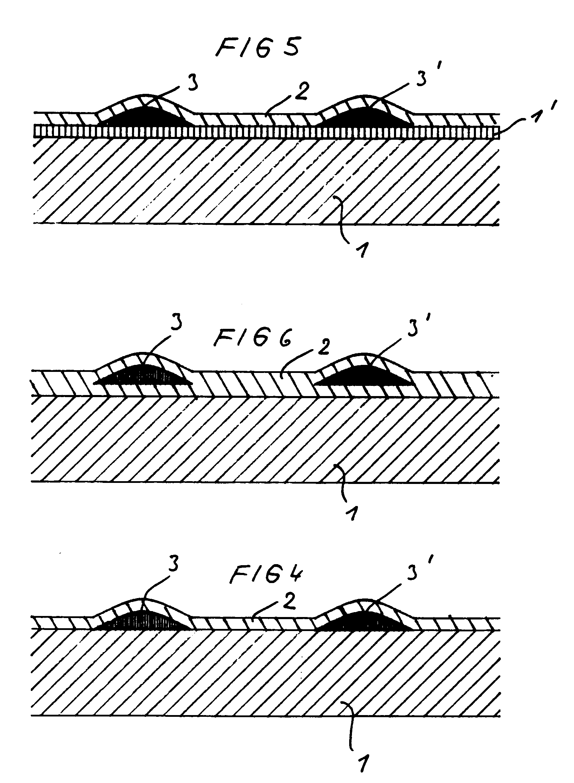

Wie bereits erläutert, zeigt Fig. 4 eine Längsschnittansicht des Sensors gemäß einem Ausführungsbeispiel, bei dem die Elektrodenanordnung 3, 3′ direkt auf dem Trägerkörper 1 sitzt und von einer sensitiven Schicht, nämlich der Ga₂O₃-Dünnschicht 2, bedeckt ist. Gemäß einem weiteren Ausführungsbeispiel, das in Fig. 5 gezeigt ist, sitzt die Elektroden-Anordnung 3, 3′ nicht unmittelbar auf dem Trägerkörper 1, sondern auf einer auf diesem aufgebrachten Trägerkörper-Abdeckschicht 1′. Die Kontaktanordnung 3, 3′ ist wie in dem in Fig. 4 gezeigten Ausführungsbeispiel durch die sensitive Schicht, nämlich die Ga₂O₃-Dünnschicht 2, bedeckt.

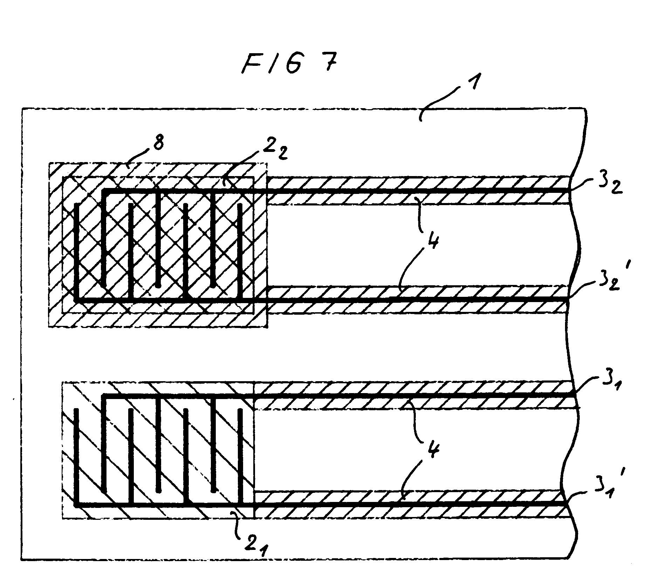

Fig. 6 zeigt ein weiteres Ausführungsbeispiel, bei dem die Kontaktelektroden-Anordnung 3, 3′ in die auf dem Trägerkörper 1 aufgebrachte Ga₂O₃-Dünnschicht 2 eingebettet ist.

Fig. 7 zeigt, wie bereits erläutert, die Draufsicht einer Anordnung gemäß einem weiteren Ausführungsbeispiel, bei dem ein gasdicht abgedeckter Sensor und ein nichtabgedeckter Sensor zum Zwecke der Kompensation der Temperaturabhängigkeit der elektrischen Leitfähigkeit des Sensors angeordnet sind. Bei diesem Ausführungsbeispiel wird kein Temperaturerfassungselement für den Sensor benötigt. Vielmehr kann durch Auswertung des Widerstandsverhältnis des mit einer Abdeckschicht 8 gasdicht abgedecktem Sensors 2₂ und des nichtabgedeckten Sensors 2₁ die Temperaturabhängigkeit des Widerstands der Sensorschichten in einem weiten Temperaturbereich ausgeglichen werden. Die beiden Sensoren 2₁ und 2₂ sind jeweils über Leiterbahnen 3₁, 3₁′ bzw. 3₂, 3₂′ mit nach außen führenden Anschlüssen verbunden. Diese Leiterbahnen nierigen Widerstands sind jeweils individuell oder gemeinsam durch eine Schutzschicht 4 bedeckt.

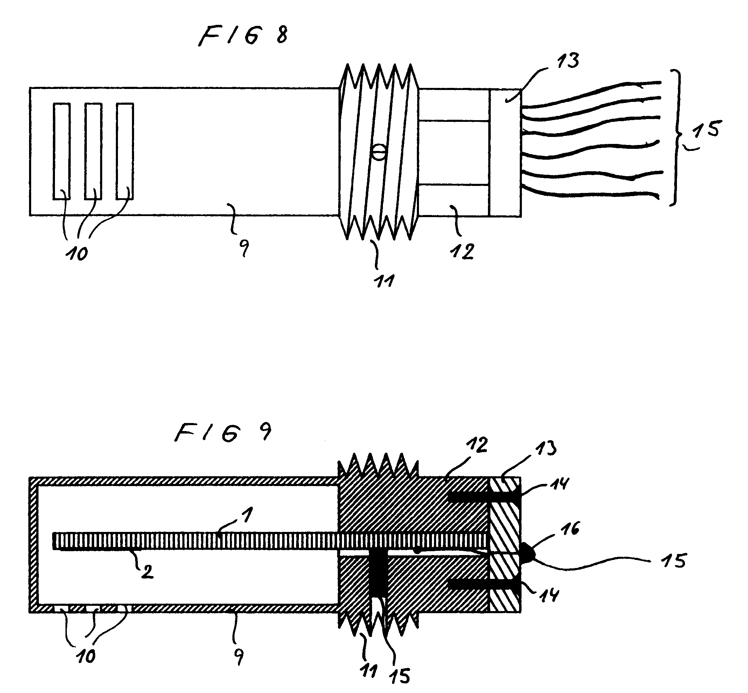

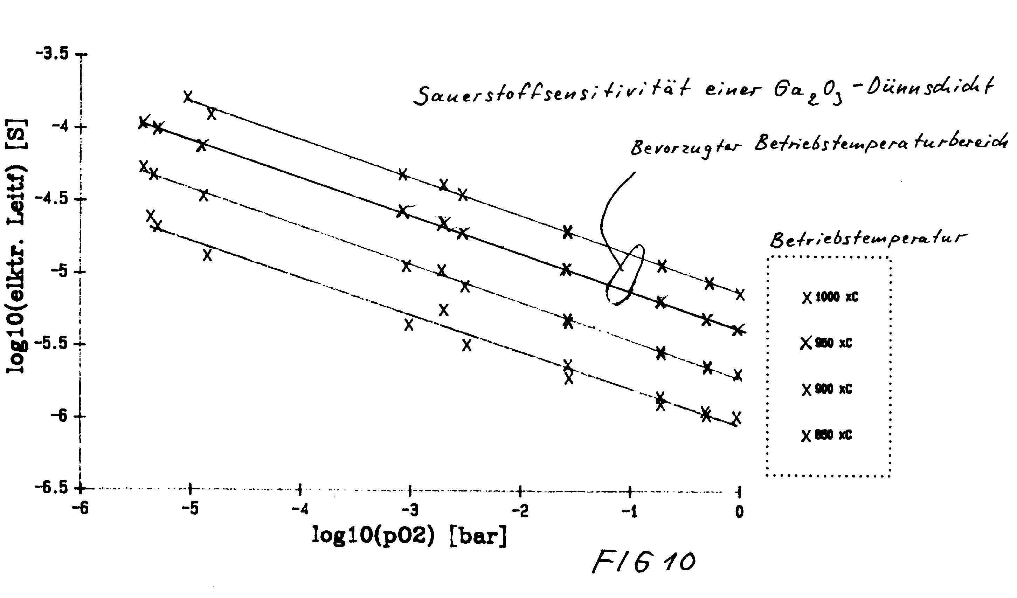

Fig. 8 zeigt ein Ausführungsbeispiel eines Sensorgehäuses 9 für den erfindungsgemäßen Sauerstoffsensor. Das Sensorgehäuse 9 weist Gaseinlaßschlitze 10 im Bereich des Sensors, einen Gewindebereich 11 zum Einschrauben des Sensorgehäueses 9 beispielsweise in einem Meßstutzen des Abgastrakts eines Pkw-Motors, ein Schraubteil 12, auf das ein Schraubenschlüssel gesetzt werden kann, eine Dichtkappe 13, die das Innere des Sensorgehäuses 9 gegen die umgebene Atmosphäre abdichtet und durch die die erforderlichen Anschlußleitungen 15 geführt sind, sowie eine Madenschraube 16 zum Fixieren des Trägerkörpers 1 innerhalb des Sensorgehäuses 9 auf. Fig. 9 zeigt einen Längsschnitt durch das Sensorgehäuse 9 gemäß Fig. 8. Wie ersichtlich, ist die Dichtkappe 13 mittels Schrauben 14 auf dem Schraubteil 12 befestigt. Die auf dem Trägerkörper 1 des Sauerstoffsensors angeordneten Leiterbahnen sind jeweils mit den betreffenden Anschlußleitungen 15 über Verschweißpunkte 17 verbunden.

Alternativ zu der Verwendung eines aluminiumfreien Trägerkörpers kann auch die Verwendung eines aluminiumhaltigen Trägerkörpers vorgesehen sein, der mit einer aluminiumfreien Diffusionssperrschicht vergütet ist.

Vorteile des erfindungsgemäßen Sauerstoffsensors:
- Da der Austausch des Sauerstoffs über Diffusionsvorgänge erfolgt, wird durch eine Reduzierung der Schichtdicke die Ansprechzeit des Sensors wesentlich verringert. Diese Reduzierung der Schichtdicke wird auf einfache Weise mittels des beschriebenen Dünnfilmprozesses erreicht.
- Das Herstellungsverfahren ermöglicht die Automatisierbarkeit von Herstellungsschritten und eine starke Verringerung des Materialverbrauchs an Ga₂O₃ (hohe Weltmarktpreise).
- Aufgrund erprobter Prozeßtechnologien wird eine hohe Reproduzierbarkeit der Sensoreigenschaften erreicht.
- In Planartechnologie ist Miniaturisierung und Integration mehrerer Komponenten (verschiedene Sensorelemente und Temperaturregelungs-Elemente) auf einem Trägerkörper möglich.
- Durch Verwendung aluminiumfreier Trägerkörper wird eine gute Langzeitstabilität der Dünnschicht-Sauerstoffsensoren erreicht.
- Der Sauerstoffsensor ist langzeitstabil und weist keine Querempfindlichkeit für reduzierende Gase auf.

## Patentansprüche

1. Sauerstoffsensor mit halbleitendem Galliumoxid, mit einem elektrisch nichtleitenden Trägerkörper, auf dem Galliumoxid aufgebracht ist, mit einer Kontaktelektroden-Anordnung zum Messen der elektrischen Leitfähigkeit des Galliumoxids, einer Heizanordnung zum Heizen des Sauerstoffsensors bei einer vorbestimmten Betriebstemperatur, einer Schutzhülle, die den Sauerstoffsensor vor äußeren mechanischen Einflüssen schützt, und einem Befestigungssockel, **dadurch gekennzeichnet,** daß das Galliumoxid als eine O₂-sensitive β-Ga₂O₃-Dünnschicht (2) ausgebildet ist, daß die Kontaktelektroden-Anordnung (3) zur Bildung eines katalytisch nichtaktiven Sauerstoffsensors mit einer deaktivierenden Schicht vollständig bedeckt ist, daß die Kontaktelektroden vorzugsweise in interdigitaler Anordnung flächig verteilt angeordnet sind und daß die Dünnschicht (2) auf einer aluminiumfreien Trägerfläche des Trägerkörpers (1) angeordnet ist.

2. Sauerstoffsensor nach Anspruch 1, **dadurch gekennzeichnet,** daß der Trägerkörper aus einem BeO-Körper besteht.

3. Sauerstoffsensor nach Anspruch 1, **dadurch gekennzeichnet**, daß der Trägerkörper mit einer Trägerabdeckschicht, vorzugsweise aus BeO, versehen ist, auf die die Dünnschicht aufgebracht ist.

4. Sauerstoffsensor nach Anspruch 1, **dadurch gekennzeichnet**, daß der Trägerkörper mit einer Trägerschicht aus SiO₂ versehen ist, auf die die Dünnschicht aufgebracht ist.

5. Sauerstoffsensor nach Anspruch 2, **dadurch gekennzeichnet**, daß die Kontaktelektroden-Anordnung direkt auf den Trägerkörper aufgebracht ist.

6. Sauerstoffsensor nach Anspruch 3 oder 4, **dadurch gekennzeichnet**, daß die Kontaktelektroden-Anordnung auf die Trägerabdeckschicht aufgebracht ist.

7. Sauerstoffsensor nach Anspruch 1, **dadurch gekennzeichnet**, daß die Kontaktelektroden-Anordnung in die Dünnschicht eingebettet ist.

8. Sauerstoffsensor nach Anspruch 1, **dadurch gekennzeichnet**, daß die Dicke der Dünnschicht zwischen 0,5 bis 10 »m, vorzugsweise 1 bis 2 »m, beträgt.

9. Sauerstoffsensor nach einem der Ansprüche 5 bis 7, **dadurch gekennzeichnet**, daß die Dicke der Kontaktelektroden zwischen 1 bis 10 »m, vorzugsweise 2 bis 3 »m, beträgt.

10. Sauerstoffsensor nach Anspruch 1, **dadurch gekennzeichnet,** daß die Kontaktelektroden aus Pt bestehen.

11. Sauerstoffsensor nach Anspruch 1, **dadurch gekennzeichnet,** daß die Kontaktelektroden aus einer Legierung aus Platin-Metallen bestehen.

12. Sauerstoffsensor nach Anspruch 1, **dadurch gekennzeichnet**, daß die Kontaktelektroden aus einem elektrisch leitendem Keramikwerkstoff bestehen.

13. Sauerstoffsensor nach einem der vorhergehenden Ansprüche, **dadurch gekennzeichnet**, daß in Nachbarschaft der Dünnschicht ein Temperatursensor auf dem Trägerkörper angeordnet ist, der die Ist-Betriebstemperatur erfaßt und dessen Erfassungssignal vorzugsweise zur Regelung auf die Soll-Betriebstemperatur verwendet wird.

14. Sauerstoffsensor nach einem der Ansprüche 1 - 13, **dadurch gekennzeichnet**, daß auf dem Trägerkörper eine Vielzahl von gleichartigen Sauerstoffsensoren und/oder andersartigen Sensoren angeordnet ist.

15. Sauerstoffsensor nach einem der vorhergehenden Ansprüche, **dadurch gekennzeichnet**, daß auf dem Trägerkörper paarweise zumindest ein sauerstoffdicht abgedeckter Sauerstoffsensor und ein nichtabgedeckter Sauerstoffsensor zur Erzielung einer Kompensation der Temperaturabhängigkeit der elektrischen Leitfähigkeit des Sauerstoffsensors angeordnet sind.

16. Sauerstoffsensor nach Anspruch 15, **dadurch gekennzeichnet**, daß der sauerstoffdicht abgedeckte Sauerstoffsensor und der nichtabgedeckte Sauerstoffsensor in Reihenschaltung einen Brückenzweig einer Wheatstone-Brücke bilden und daß ein anderer Brückenzweig aus einer Reihenschaltung zweier ohm'scher Widerstände gebildet ist, wobei die Potentialdifferenz zwischen den Verbindungspunkten zwischen den beiden Sauerstoffsensoren einerseits und den zwei ohm'schen Widerständen des anderen Brückenzweiges andererseits als Ausgangssignal des Sauerstoffsensors dient.

17. Sauerstoffsensor nach einem der Ansprüche 1 - 16, **dadurch gekennzeichnet**, daß die Kontaktelektroden jeweils mit einer Anschlußelektrode, die vorzugsweise aus Pt besteht, verbunden sind, die aus dem Sauerstoffsensor herausgeführt sind und daß die Anschlußelektroden mit einer sauerstoffdichten Schutzschicht bedeckt sind.

18. Sauerstoffsensor nach einem der Ansprüche 1 - 17, **dadurch gekennzeichnet**, daß der Sauerstoffsensor bei einem Sauerstoffpartialdruck von minimal 10-⁻¹⁴ bar (x 10⁵Pa) an aufwärts zu betreiben ist.

19. Verfahren zum Betrieb des Sauerstoffsensors nach einem der Ansprüche 1 bis 18, **dadurch gekennzeichnet,** daß die Dünnschicht mittels der Heizanordnung auf eine Betriebstemperatur in einem Bereich von 750° bis 1100°C, vorzugsweise 950° - 1000°C, aufgeheizt wird.

20. Verfahren zur Herstellung des Sauerstoffsensors nach Anspruch 1, **dadurch gekennzeichnet**, daß die O₂-sensitive Dünnschicht durch HF-Sputtern aufgebracht wird, wobei als Materialquelle ein Ga₂O₃-Keramiktarget dient, wobei der Trägerkörper auf eine Temperatur von vorzugsweise 500°C aufgeheizt wird und wobei dem Sputtergas "Argon" ein Sauerstoffanteil im Bereich von 10 bis 30, vorzugsweise 20 Volumenprozent, beigemischt wird.

21. Verfahren zur Herstellung des Sauerstoffsensors nach Anspruch 1, **dadurch gekennzeichnet**, daß die sauerstoffsensitive Ga₂O₃-Schicht mittels Siebdrucktechnologie aufgebracht wird.

22. Verfahren zur Herstellung des Sauerstoffsensors nach Anspruch 20 oder 21, **dadurch gekennzeichnet**, daß die Kontaktelektroden mittels Siebdruck aufgebracht werden.

23. Verfahren zur Herstellung des Sauerstoffsensors nach Anspruch 20 oder 21, **dadurch gekennzeichnet,** daß die Kontaktelektroden mittels Aufsputtern eines Pt-Films aufgebracht und mittels Photolithographie und anschließender Plasmaätzung strukturiert werden.

24. Verfahren zur Herstellung des Sauerstoffsensors nach Anspruch 7, **dadurch gekennzeichnet**, daß in einem ersten Schritt eine erste Lage der O₂-sensitiven Dünnschicht aufgebracht wird, daß in einem zweiten Schritt auf die erste Lage der O₂-sensitiven Dünnschicht die Kontaktelektroden-Anordnung aufgebracht wird und daß in einem dritten Schritt eine zweite Lage der O₂-sensitiven Dünnschicht zur Einbettung der Kontaktelektroden-Anordnung aufgebracht wird.

25. Verfahren zur Herstellung des Sauerstoffsensors nach einem der Ansprüche 20 bis 23, **dadurch gekennzeichnet**, daß zur Einstellung der Stöchiometrie der O₂-sensitiven Dünnschicht und zum Erzielen der erforderlichen Kristallstruktur der O₂-sensitiven Dünnschicht ein Temperprozeß an Luft bei Temperaturen um vorzugsweise 1100°C durchgeführt wird.

## Claims

1. Oxygen sensor containing semiconducting gallium oxide, comprising an electrically non-conductive substrate body, to which gallium oxide has been applied, a contact electrode arrangement for measuring the electrical conductivity of the gallium oxide, a heating arrangement for heating the oxygen sensor at a predetermined operating temperature, a protective cover which protects the oxygen sensor against external mechanical influences, and a mounting base, characterized in that the gallium oxide takes the form of an O₂-sensitive β-Ga₂O₃ thin film (2), in that the contact electrode arrangement (3), in order to form a catalytically inactive oxygen sensor, is completely covered with a deactivating layer, in that the contact electrodes are preferably arranged two-dimensionally distributed in an interdigital arrangement, and in that the thin film (2) is arranged on an aluminium-free carrier surface of the substrate body (1).

2. Oxygen sensor according to Claim 1, characterized in that the substrate body is composed of a BeO body.

3. Oxygen sensor according to Claim 1, characterized in that the substrate body is provided with a substrate masking layer, preferably made of BeO, to which the thin film has been applied.

4. Oxygen sensor according to Claim 1, characterized in that the substrate body is provided with a substrate layer made of SiO₂, to which the thin film has been applied.

5. Oxygen sensor according to Claim 2, characterized in that the contact electrode arrangement has been applied directly to the substrate body.

6. Oxygen sensor according to Claim 3 or 4, characterized in that the contact electrode arrangement has been applied to the substrate masking layer.

7. Oxygen sensor according to Claim 1, characterized in that the contact electrode arrangement is embedded in the thin film.

8. Oxygen sensor according to Claim 1, characterized in that the thickness of the thin film is between 0.5 and 10 »m, preferably 1 and 2 »m.

9. Oxygen sensor according to any one of Claims 5 to 7, characterized in that the thickness of the contact electrodes is between 1 and 10 »m, preferably 2 and 3 »m.

10. Oxygen sensor according to Claim 1, characterized in that the contact electrodes are composed of Pt.

11. Oxygen sensor according to Claim 1, characterized in that the contact electrodes are composed of an alloy of platinum metals.

12. Oxygen sensor according to Claim 1, characterized in that the contact electrodes are composed of an electrically conductive ceramic material.

13. Oxygen sensor according to any one of the preceding claims, characterized in that there is arranged, in the vicinity of the thin film, on the substrate body, a temperature sensor which picks up the actual operating temperature and whose pick-up signal is preferably used for closed-loop control using the operating temperature as the set-point.

14. Oxygen sensor according to any one of Claims 1-13, characterized in that there are arranged, on the substrate body, a multiplicity of oxygen sensors of the same kind and/or sensors of a different kind.

15. Oxygen sensor according to any one of the preceding claims, characterized in that there are arranged, on the substrate body, in pairs, at least one oxygen sensor masked in an oxygen-tight manner and a non-masked oxygen sensor, to achieve compensation for the temperature dependence of the electrical conductivity of the oxygen sensor.

16. Oxygen sensor according to Claim 15, characterized in that the oxygen sensor masked in an oxygen-tight manner and the non-masked oxygen sensor in series connection form one bridge arm of a Wheatstone bridge, and in that another bridge arm is formed from a series connection of two ohmic resistors, the potential difference between the connection points between the two oxygen sensors on the one hand and the two ohmic resistors of the other bridge arm on the other hand serving as the output signal of the oxygen sensor.

17. Oxygen sensor according to any one of Claims 1-16, characterized in that the contact electrodes are in each case connected to a connecting electrode which is preferably composed of Pt and which is run out from the oxygen sensor, and in that the connecting electrodes are covered with an oxygen-tight protective layer.

18. Oxygen sensor according to any one of Claims 1-17, characterized in that the oxygen sensor can be operated at an oxygen partial pressure of from a minimum of 10⁻¹⁴ bar (x 10⁵ Pa) upwards.

19. Method for operating the oxygen sensor according to any one of Claims 1 to 18, characterized in that the thin film is heated, by means of the heating arrangement, to an operating temperature in a range of from 750° to 1100°C, preferably 950°-1000°C.

20. Method for fabricating the oxygen sensor according to Claim 1, characterized in that the O₂-sensitive thin film is applied by HF-sputtering, the source of material employed being a Ga₂O₃ ceramic target, the substrate body being heated to a temperature of preferably 500°C, and the sputtering gas "argon" being admixed with an oxygen fraction in the range of from 10 to 30, preferably 20 per cent by volume.

21. Method for fabricating the oxygen sensor according to Claim 1, characterized in that the oxygen-sensitive Ga₂O₃ layer is applied by means of a screen-printing technique.

22. Method for fabricating the oxygen sensor according to Claim 20 or 21, characterized in that the contact electrodes are applied by means of screen-printing.

23. Method for fabricating the oxygen sensor according to Claim 20 or 21, characterized in that the contact electrodes are applied by means of a Pt film being deposited by sputtering and are patterned by means of photolithography followed by plasma etching.

24. Method for fabricating the oxygen sensor according to Claim 7, characterized in that, in a first step, a first layer of the O₂-sensitive thin film is applied, in that, in a second step, the first layer of the O₂-sensitive thin film has the contact electrode arrangement applied thereto, and in that, in a third step, a second layer of the O₂-sensitive thin film is applied to embed the contact electrode arrangement.

25. Method for fabricating the oxygen sensor according to any one of Claims 20 to 23, characterized in that, to set the stoichiometry of the O₂-sensitive thin film and to achieve the required crystal structure of the O₂-sensitive thin film, a tempering process is carried in air at temperatures around preferably 1100°C.

## Revendications

1. Capteur d'oxygène à oxyde de gallium semiconducteur comprenant un support non conducteur de l'électricité sur lequel est déposé de l'oxyde de gallium, un dispositif à électrodes de contact destiné à mesurer la conductivité électrique de l'oxyde de gallium, un dispositif de chauffage destiné à chauffer le capteur d'oxygène à une température de fonctionnement prescrite, une gaine de protection qui protège le capteur d'oxygène des influences mécaniques extérieures et une embase de fixation, caractérisé en ce que l'oxyde de gallium est constitué sous la forme d'une couche mince (2) en Ga₂O₃ β sensible à O₂, en ce que le dispositif (3) d'électrodes de contact est revêtu entièrement, pour former un capteur d'oxygène inactif catalytiquement, d'une couche de désactivation, en ce que les électrodes de contact sont réparties en surface, de préférence en étant interdigitées, et en ce que la couche mince (2) est appliquée sur une surface du support (1) qui est exempte d'aluminium.

2. Capteur d'oxygène suivant la revendication 1, caractérisé en ce que le support est constitué d'une pièce en BeO.

3. Capteur d'oxygène suivant la revendication 1, caractérisé en ce que le support est muni d'une couche de revêtement, de préférence en BeO, sur laquelle est déposée la couche mince.

4. Capteur d'oxygène suivant la revendication 1, caractérisé en ce que le support est muni d'une couche en SiO₂ sur laquelle est déposée la couche mince.

5. Capteur d'oxygène suivant la revendication 2, caractérisé en ce que le dispositif à électrodes de contact est déposé directement sur le support.

6. Capteur d'oxygène suivant la revendication 3 ou 4, caractérisé en ce que le dispositif à électrodes de contact est déposé sur la couche de revêtement du support.

7. Capteur d'oxygène suivant la revendication 1, caractérisé en ce que le dispositif à électrodes de contact est enrobé dans la couche mince.

8. Capteur d'oxygène suivant la revendication 1, caractérisé en ce que l'épaisseur de la couche mince est comprise entre 0,5 et 10 microns, et de préférence entre 1 et 2 microns.

9. Capteur d'oxygène suivant l'une des revendications 5 à 7, caractérisé en ce que l'épaisseur des électrodes de contact est comprise entre 1 et 10 microns, et de préférence entre 2 et 3 microns.

10. Capteur d'oxygène suivant la revendication 1, caractérisé en ce que les électrodes de contact sont en Pt.

11. Capteur d'oxygène suivant la revendication 1, caractérisé en ce que les électrodes de contact sont en un alliage en métaux du groupe du platine.

12. Capteur d'oxygène suivant la revendication 1, caractérisé en ce que les électrodes de contact sont en un matériau céramique conducteur d'électricité.

13. Capteur d'oxygène suivant l'une des revendications précédentes, caractérisé en ce qu'au voisinage de la couche mince est prévu sur le support un capteur de température qui détecte la température de fonctionnement réelle et dont le signal de détection est utilisé de préférence pour régler la température de fonctionnement de consigne.

14. Capteur d'oxygène suivant l'une des revendications 1 à 13, caractérisé en ce qu'il est prévu sur le support une pluralité de capteurs d'oxygène identiques et/ou de capteurs de types différents.

15. Capteur d'oxygène suivant l'une des revendications précédentes, caractérisé en ce qu'il est prévu sur le support un couple d'au moins un capteur d'oxygène revêtu de manière étanche à l'oxygène et d'un capteur d'oxygène non revêtu en vue d'obtenir une compensation de la variation de la conductivité électrique du capteur d'oxygène en fonction de la température.

16. Capteur d'oxygène suivant la revendication 15, caractérisé en ce que le capteur d'oxygène revêtu de manière étanche à l'oxygène et le capteur d'oxygène non revêtu forment suivant un montage en série une branche d'un pont de Wheatstone, et en ce qu'une autre branche du pont est formée d'un montage en série de deux résistances ohmiques, la différence de potentiel entre les points de liaison entre les deux capteurs d'oxygène d'une part et les deux résistances ohmiques de l'autre branche de pont d'autre part servant de signal de sortie du capteur d'oxygène.

17. Capteur d'oxygène suivant l'une des revendications 1 à 16, caractérisé en ce que les électrodes de contact sont reliées chacune à une électrode de raccordement, qui est de préférence en Pt et qui sort du capteur d'oxygène, et en ce que les électrodes de raccordement sont revêtues d'une couche de protection étanche à l'oxygène.

18. Capteur d'oxygène suivant l'une des revendications 1 à 17, caractérisé en ce que le capteur d'oxygène peut fonctionner à partir d'une pression partielle d'oxygène minimum de 10⁻¹⁴ bar (10⁵Pa).

19. Procédé pour faire fonctionner le capteur d'oxygène suivant l'une des revendications 1 à 18, caractérisé en ce qu'il consiste à porter la couche mince au moyen du dispositif de chauffage à une température de fonctionnement de l'ordre de 750 à 1100°C, et de préférence de 950 à 1000°C.

20. Procédé de fabrication du capteur d'oxygène suivant la revendication 1, caractérisé en ce qu'il consiste à déposer la couche mince sensible à O₂ par pulvérisation cathodique sous haute fréquence, en se servant comme source de matière d'une cible céramique en Ga₂O₃, le support étant porté à une température de préférence de 500°C et une proportion d'oxygène représentant de 10 à 30, et de préférence 20% en volume, étant mélangée à l'argon servant de gaz de pulvérisation cathodique.

21. Procédé de fabrication du capteur d'oxygène suivant la revendication 1, caractérisé en ce qu'il consiste à déposer la couche de Ga₂O₃ sensible à l'oxygène par sérigraphie.

22. Procédé de fabrication du capteur d'oxygène suivant la revendication 20 ou 21, caractérisé en ce qu'il consiste à déposer les électrodes de contact par sérigraphie.

23. Procédé de fabrication du capteur d'oxygène suivant la revendication 20 ou 21, caractérisé en ce qu'il consiste à déposer les électrodes de contact par pulvérisation cathodique d'une pellicule de Pt et à les structurer par photolithographie et par attaque ultérieure au plasma.

24. Procédé de fabrication du capteur d'oxygène suivant la revendication 7, caractérisé en ce qu'il consiste en un premier stade à déposer une première strate de la couche mince sensible à O₂, à déposer dans un deuxième stade sur la première strate de la couche mince sensible à O₂ le dispositif à électrodes de contact et à déposer dans un troisième stade une deuxième strate de la couche mince sensible à O₂ pour enrober le dispositif à électrodes de contact.

25. Procédé de fabrication du capteur d'oxygène suivant l'une des revendications 20 à 23, caractérisé en ce qu'il consiste, pour régler la stoechiométrie de la couche mince sensible à O₂ et pour produire la structure cristalline nécessaire de la couche mince sensible à O₂, à effectuer un processus de recuit dans l'air à des températures voisines, de préférence, de 1100°C.
